# EUROPEAN PATENT APPLICATION

(11) **EP 3 407 099 A1**
(43) Date of publication of application: **28.11.2018**
(21) Application number: 17741417.4
(22) Date of filing: 18.01.2017
(51) Int. Cl.: G02B 3/00, B29C 51/08, B29C 59/02, B29C 69/02, G02B 3/06, B29L 11/00

(54) **MOLDING MATERIAL, MANUFACTURING METHOD THEREFOR, THREE-DIMENSIONALLY SHAPED ARTICLE, AND MANUFACTURING METHOD THEREFOR**

(30) Priority: 19.01.2016 JP 2016007922
(71) Applicant: FUJIFILM Corporation, Tokyo 106-8620 (JP)
(72) Inventor: ABIRU, Daisaku, Minami-ashigara-shi Kanagawa 250-0193 (JP); TAKENOSHITA, Hiromi, Minami-ashigara-shi Kanagawa 250-0193 (JP); NAKAMURA, Samito, Minami-ashigara-shi Kanagawa 250-0193 (JP)
(74) Representative: Hoffmann Eitle
(86) International application number: PCT/JP2017/001520
(87) International publication number: WO 2017/126540

(57) **Abstract**

Provided is a three-dimensional molded article which has an excellent designability by imparting changes to the appearance of light and a method for producing the same and a molding material as a material of the three-dimensional molded article and a method for producing the same.

A decorative member (22, 82, or 120) as a three-dimensional molded article is formed in a curved sheet shape. In the decorative member (22, 82, or 120), a plurality of cylindrical lenses is arrayed in parallel on one surface. In cylindrical lenses in a molding portion (26a or 86a) and cylindrical lenses in a molding portion (26d or 86d), the orientations of the lenses are different from each other. In addition, in the cylindrical lenses in the molding portion (26a or 86a) and the cylindrical lenses in the molding portion (26d or 86d), the shapes of cross sections of these cylindrical lenses in the array direction are different from each other.

## Description

### BACKGROUND OF THE INVENTION

### 1. Field of the Invention

The present invention relates to a molding material and a method for producing the same, and a three-dimensional molded article and a method for producing the same.

### 2. Description of the Related Art

As a substance for enhancing designability or differentiating designs of the interiors of automobiles, the appearances of home appliances, and the like, there is a decorative film. A number of decorative films are produced by forming a pattern on a film base material by printing or the like, but these decorative films have a limitation on the power of expression, the diversity of expression, and the like.

In order to improve the power of expression or diversify expression described above, techniques enabling the observation of three-dimensional images or enabling the observation of different images in a switching manner using a lenticular sheet in which a number of so-called cylindrical lenses having a semicircular column shape are arrayed side by side in a direction orthogonal to the extension direction of the cylindrical lenses are known. In these techniques, stripe images obtained by dividing mutually different images in a stripe shape respectively are alternately disposed on the rear surface side, which is the flat lens surface side, of the lenticular sheet. For example, in the techniques enabling the observation of three-dimensional images, for example, stripe images obtained by dividing a right-view image and a left-view image captured from two (right and left) views in a stripe shape respectively are alternately disposed on the rear surface side, which is the flat lens surface side, of a lenticular sheet, and two adjacent stripe images are located on the flat lens surface of one cylindrical lens. The right eye and the left eye observe the right-view image and the left-view image, between which there is parallax, respectively through the respective cylindrical lenses, whereby a three-dimensional image can be observed. In addition, it is also known that, like the technique described in JP2011-154301A, a sense of three-dimensions is further improved by dividing a multi-view image made up of N (N=3 or more)-view images in a stripe shape and disposing the N stripe images in series on the rear of one lenticular lens.

In addition, JP2013-205477A discloses that a three-dimensional curved surface-shaped screen including a base layer, a light ray control layer, and a hardcoat layer enhances designability in the usages of automobiles and the like. The light ray control layer has a plurality of extending light absorption portions. The plurality of light absorption portions is arrayed in a certain cycle and has a cross-sectional shape that is an isosceles triangle shape or a trapezoidal shape. This screen is manufactured using a photopolymer method (also referred to as a 2P method) in which an ionizing radiation-curable resin and a shaping die are used.

### SUMMARY OF THE INVENTION

However, the techniques using a lenticular sheet, which are known by JP2011-154301A and the like, have a limitation on usages and designability due to the flatness of the sheet. The screen described in JP2013-205477A is said to have a three-dimensional curved surface shape, but has a limitation on changes that are imparted to the appearance of light, and an additional improvement of designability is desired. In addition, according to the method for manufacturing a screen described in JP2013-205477A, three-dimensional curved surface shapes to be obtained are limited, and thus, similar to the techniques known by JP2011-154301A and the like, the usages are limited.

Therefore, an object of the present invention is to provide a three-dimensional molded article which has an excellent designability by imparting changes to the appearance of light and a method for producing the same and a molding material as a material of the three-dimensional molded article and a method for producing the same.

A molding material of the present invention comprises a thermosetting compound that cures by heating and a transparent polymer which is obtained by curing a thermosetting compound, the molding material is formed in a film shape, and a plurality of cylindrical lenses is arrayed in parallel on one surface of the molding material.

The molding material preferably further comprises a convex lens layer forming a convex lens surface of the cylindrical lens and a transparent layer forming a flat lens surface of the cylindrical lens. The molding material preferably further comprises an image-forming portion in which an image is formed using paint on the flat lens surface of the cylindrical lens.

A three-dimensional molded article of the present invention comprises a plurality of cylindrical lenses arrayed in parallel and is formed in a curved sheet shape, the plurality of cylindrical lenses includes a first cylindrical lens and a second cylindrical lens in which orientations of the lenses are different from each other, and the first cylindrical lens and the second cylindrical lens have mutually different cross-sectional shapes in an array direction.

The three-dimensional molded article preferably further comprises a transparent polymer obtained by curing a thermosetting compound. The three-dimensional molded article preferably further comprises a convex lens layer forming convex lens surfaces of the first cylindrical lens and the second cylindrical lens and a transparent layer forming flat lens surfaces of the first cylindrical lens and the second cylindrical lens. The three-dimensional molded article preferably further comprises an image-forming portion formed using paint on the flat lens surfaces of the plurality of cylindrical lenses.

A method for producing a molding material of the present invention has a coating step and a lens-forming step. In the coating step, a coating fluid including a thermosetting compound that cures by heating is applied to a support, thereby forming a coated film. In the lens-forming step, the coated film is pressed using a shape-imparting member having a plurality of semicircular column-shaped concave portions formed on a surface thereof so as to form a plurality of cylindrical lenses, the coated film is heated so as to be cured in a state in which the thermosetting compound remains, and a molding material including the thermosetting compound and a polymer which is obtained by curing the thermosetting compound is produced. The shape-imparting member is preferably a shape-imparting roller having a concave portion formed in a circumferential surface thereof.

A method for producing a three-dimensional molded article of the present invention has a coating step, a lens-forming step, and a shaping step. In the coating step, a coating fluid including a thermosetting compound that cures by heating is applied to a support, thereby forming a coated film. In the lens-forming step, the coated film is pressed using a shape-imparting member having a plurality of semicircular column-shaped concave portions formed on a surface thereof so as to form a plurality of cylindrical lenses, the coated film is heated so as to be cured in a state in which the thermosetting compound remains, and a molding material including the thermosetting compound and a polymer which is obtained by curing the thermosetting compound is produced. In the shaping step, a shaping treatment is carried out on the molding material under heating.

According to the present invention, a three-dimensional molded article which has an excellent designability by imparting changes in the appearance of light.

### BRIEF DESCRIPTION OF THE DRAWINGS

Fig. 1 is a perspective schematic view of a molding material according to an embodiment of the present invention.
Fig. 2 is a side schematic view of a lighting device.
Fig. 3 is a partial cross-sectional schematic view of the lighting device.
Fig. 4A is an explanatory view of a cylindrical lens in a first molding portion.
Fig. 4B is an explanatory view of a cylindrical lens in a second molding portion.
Fig. 5 is a schematic view of a molding material-producing device according to an embodiment of the present invention.
Fig. 6 is a cross-sectional schematic view of a shaping device according to an embodiment of the present invention.
Fig. 7 is a schematic view of a lighting device which is another embodiment.
Fig. 8 is an explanatory view of cylindrical lenses in a decorative member seen in an A direction of Fig. 7.
Fig. 9 is a perspective schematic view of a molding material which is another embodiment.
Fig. 10 is an explanatory view of a decorative member which is another embodiment.
Fig. 11 is an explanatory view of a layered structure of the decorative member.

### DESCRIPTION OF THE PREFERRED EMBODIMENTS

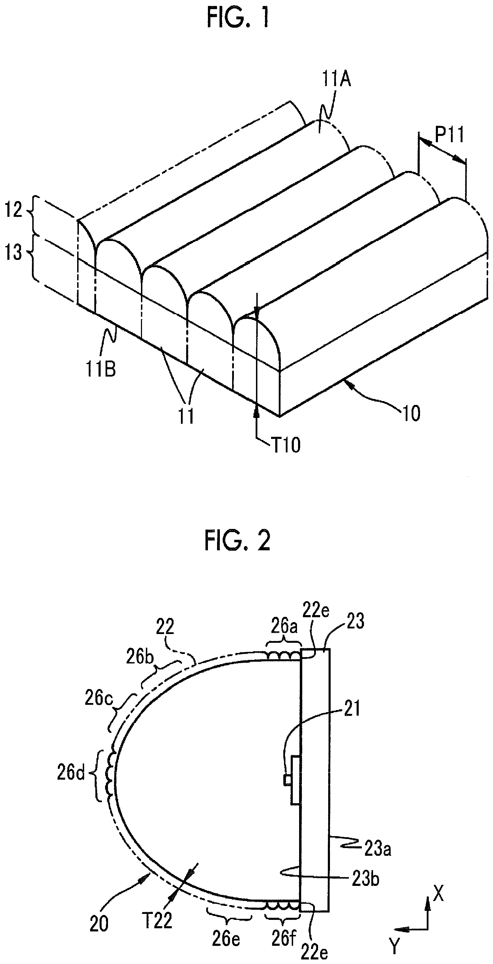

In Fig. 1, a molding material 10 according to an embodiment of the present invention is a material for making a three-dimensional molded article. The molding material 10 is formed in a film shape, and a thickness T10 is set to 0.3 mm, but is not limited thereto, and is preferably in a range of 0.1 mm or more and 5.0 mm or less. Meanwhile, the molding material 10 may be formed in a long shape or formed in a sheet shape.

The molding material 10 is constituted of a plurality of semicircular column-shaped cylindrical lenses 11. The plurality of cylindrical lenses 11 is arrayed side by side in a direction orthogonal to the extension direction of each cylindrical lens, that is, is arrayed in parallel, and the molding material 10 has a so-called lenticular sheet aspect. A pitch P11 between the cylindrical lenses 11 is set to 0.127 mm in the present embodiment, but is not limited thereto, and is preferably in a range of 0.05 mm or more and 5.0 mm or less. Meanwhile, the pitch P11 refers to the distance between the apexes of the cylindrical lenses 11.

The cylindrical lens 11 has a first convex lens layer 12 forming a convex-form first lens surface 11A and a transparent layer 13 forming a flat second lens surface 11B and has a layered structure in which these layers overlap each other in the thickness direction. The first convex lens layer 12 and the transparent layer 13 are both transparent, and thus there are cases in which the boundary between the layers is invisible; however, in Fig. 1, the boundary is illustrated for the convenience of description.

The first convex lens layer 12 includes a first thermosetting compound that cures by heating and a polymer obtained by curing a second thermosetting compound that cures by heating (hereinafter, referred to as a thermosetting polymer). The first thermosetting compound and the second thermosetting compound respectively crosslink and cure by heating and generate the thermosetting polymer through the curing. In other words, the thermosetting polymer refers to a cured substance obtained by curing the thermosetting compound, that is, a curing product. The first thermosetting compound is cured by heating in a shaping treatment such as thermal shaping described below and is present as a non-curable component in the first convex lens layer 12. The first thermosetting compound and the second thermosetting compound may be different from each other, but are set to be identical to each other in the present embodiment. In a case in which the mass of the first thermosetting compound is represented by M1, and the mass of the first convex lens layer 12 is represented by M2, in the first convex lens layer 12, the mass ratio of the first thermosetting compound obtained from (M1/M2)×100 is preferably at least 10 mass%, that is, in a range of 10 mass% or more and less than 100 mass%. Meanwhile, in the present embodiment, the mass M1 and the mass M2 can be obtained from the peak intensities at 810 cm⁻¹ and 1,635 cm⁻¹ in a Fourier transform infrared spectrometer (FT-IR) respectively.

Examples of the first thermosetting compound and the second thermosetting compound include tricyclodecane dimethanol diacrylate (hereinafter, referred to as ADCP), bisphenol A (hereinafter, referred to as Bis-A), and phenolic resins, and, in the present embodiment, ADCP is used.

The first convex lens layer 12 may include a photocurable polymer in addition to the first thermosetting compound and the thermosetting polymer and includes a photocurable polymer in the present embodiment. The photocurable polymer refers to a polymer obtained by crosslinking and curing a photocurable compound through light irradiation. Preferred examples of the photocurable polymer include a photocurable polymer obtained by curing ADCP (a curing product of ADCP), a photocurable polymer obtained by curing Bis-A (a curing product of Bis-A), and a photocurable polymer obtained by curing a phenolic resin (a curing product of a phenolic resin), and, in the present embodiment, the photocurable polymer is a photocurable polymer obtained by curing ADCP.

The transparent layer 13 is formed of a thermoplastic resin, the thermoplastic resin is preferably polyethylene terephthalate (hereinafter, referred to as PET), a polycarbonate (hereinafter, referred to as PC), triacetyl cellulose (hereinafter, referred to as TAC), or the like, and, in the present embodiment, the thermoplastic resin is PC. In addition, the transparent layer 13 may include a refractive index adjuster, zinc oxide (ZnO), titanium oxide (TiO₂), and the like in addition to the thermoplastic resin.

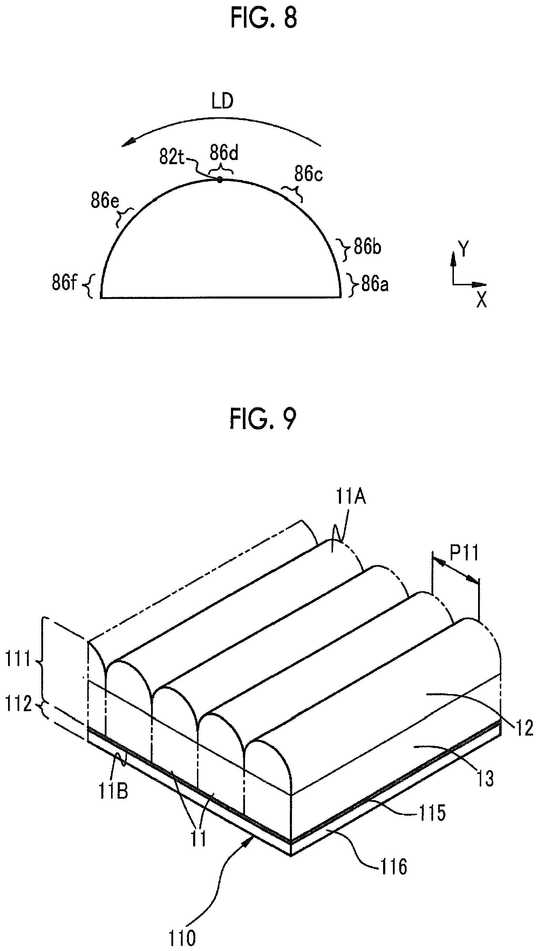

The molding material 10 does not need to have the transparent layer 13, but preferably includes the transparent layer. This is because the refractive index of the entire molding material 10 can be adjusted by providing the transparent layer 13 and adjusting the thickness of the transparent layer 13. For example, in a case in which an image-forming portion 112 (refer to Fig. 9) is provided on the second lens surface 11B as in an embodiment described below, the provision of the first transparent layer 13 formed of any of PET, PC, and TAC enhances a sense of three-dimensions in the case of observing the molding material and further improves the designability.

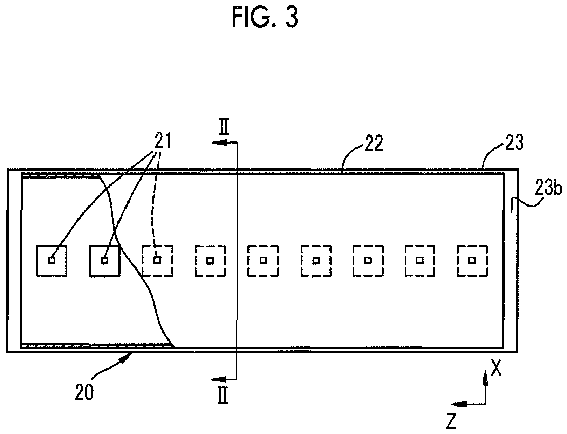

The action of the above-described constitution will be described. Since the molding material 10 is formed in a film shape, it is easy to curve the molding material using a variety of shaping methods. Since the first convex lens layer 12 includes the first thermosetting compound, the molding material 10 is shaped into a shape curved by the shaping treatment under heating such as thermal shaping described below. In a case in which the transparent layer 13 is provided as in the present embodiment, since the transparent layer 13 is formed of the thermoplastic resin, the molding material 10 is shaped into a shape curved by the shaping treatment under heating. In addition, since the first convex lens layer 12 includes the first thermosetting compound as the non-curable component, a three-dimensional molded article such as a decorative member 22 described below (refer to Fig. 2 and Fig. 3) can be obtained using the heat energy from heating in the shaping treatment for curing without causing cracking or the like. Furthermore, since the first convex lens layer 12 includes the thermosetting polymer, the form of the cylindrical lens 11 does not excessively change even after the shaping treatment, and thus the function as a lens is maintained.

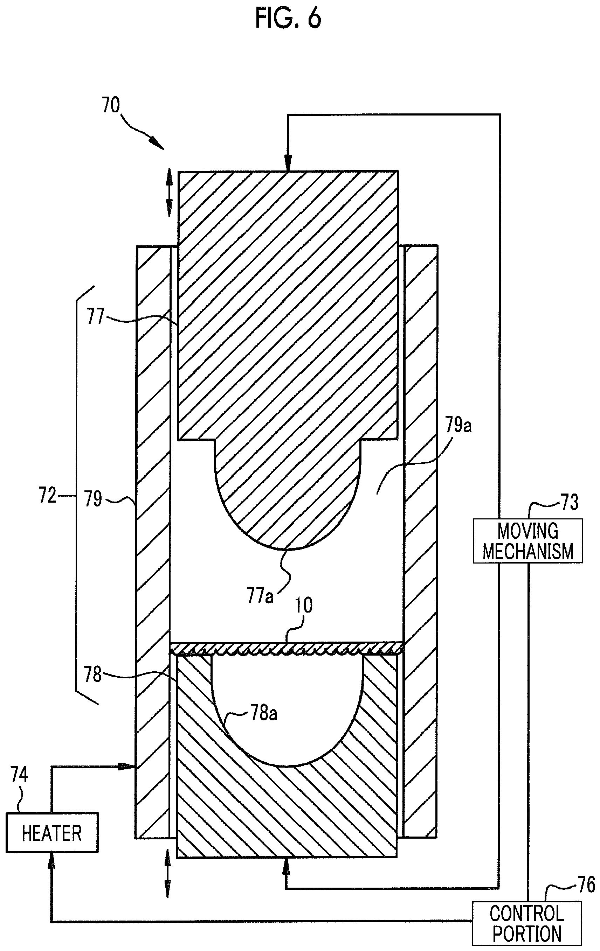

The molding material 10 is shaped into a three-dimensional molded article using, for example, a shaping device 70 (refer to Fig. 6) described below. An example of producing a decorative member as a three-dimensional molded article will be described below. In Fig. 2, a lighting device 20 is constituted of a light source 21, the decorative member 22 as a three-dimensional molded article, a support member 23, and the like. The support member 23 supports the light source 21 and the decorative member 22. The support member 23 is formed in, for example, a rectangular plate shape. The support member 23 is put into an upright posture, and one surface 23a is used as a fixing surface that is fixed to, for example, an indoor wall surface, whereby the lighting device 20 is fixed to the wall surface. Alternatively, the support member 23 is put into a posture of being located above so that the decorative member 22 faces downwards, and the lighting device 20 is fixed to, for example, an indoor roof or the like in this state. The other surface 23b of the support member 23 is provided with the light source 21 and the decorative member 22. Meanwhile, hereinafter, the upward orientation in Fig. 2 will be referred to as the X direction, and the left orientation orthogonal to the X direction will be referred to as the Y direction.

The light source 21 is a light emitting diode (LED) light source, but is not limited to an LED, and may be, for example, an incandescent bulb or the like. The light source 21 is a so-called point light source in which a chip-shaped element portion (not illustrated) emits light and the central portion discharges intense light and is provided in approximately the center of the support member 23 in the vertical direction in Fig. 2. In the support member 23, a power supply portion (not illustrated) such as a battery that supplies power to the light source 21 is mounted. In addition, in the support member 23, a switch (not illustrated) for turning the power supply from the power supply portion on and off is provided.

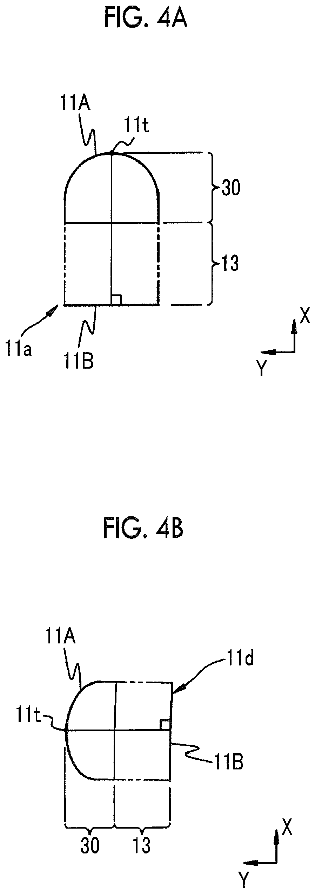

The decorative member 22 is a member performing a light decoration function of imparting changes to the appearance of light that is discharged from the light source 21 and enhancing the designability of the lighting device 20. The decorative member 22 is formed in a sheet shape. The decorative member 22 is curved in the array direction of the plurality of cylindrical lenses 11 and has a U-like shape. Therefore, the plurality of cylindrical lenses 11 is disposed side by side on one continuous curved surface. End portions 22e of the U-like shape are respectively fixed to the support member 23, and thus the decorative member 22 is supported by the support member 23. The decorative member 22 is disposed so that the transparent layers 13 (refer to Fig. 1) of the cylindrical lenses 11 face the light source 21 side and a second convex lens layer 30 (refer to Fig. 4A and Fig. 4B) side faces the observer side, that is, the external side, and a convex curve shape is formed on the second convex lens layer 30 side. Therefore, in this example, in some of the plurality of cylindrical lenses 11 constituting the decorative member 22, the second lens surface 11B (Fig. 4A and Fig. 4B) described below is slightly curved in the array direction of the cylindrical lenses 11, but the width of the cylindrical lens 11 is extremely small, and thus the cylindrical lens is approximately flat, and thus the second lens surface 11B can be considered to be flat.

Since the curve shape of the decorative member 22 in this example is a U-like shape, in a cross section orthogonal to the longitudinal direction of the cylindrical lens 11, the decorative member 22 has a curvature that changes from the respective end portions 22e of the U-like shape toward the center, but the curve shape of the decorative member 22 is not limited thereto. For example, the curve shape may be a shape curved in a semicircular shape having a constant curvature or a shape having two types (convex and concave) of curve shapes on the second convex lens layer 30 side like a W-like shape. Meanwhile, in Fig. 2, each cylindrical lens 11 is illustrated in a significantly exaggerated manner.

The decorative member 22 is formed in a curve shape by the thermal shaping of the molding material 10, and thus at least some of the plurality of cylindrical lenses 11 are stretched in the width direction of the cylindrical lens 11 more than the cylindrical lenses in the molding material 10. The width direction of the cylindrical lens 11 refers to a direction orthogonal to the extension direction (the longitudinal direction). Here, the decorative member 22 is imaginarily divided in the array direction of the cylindrical lenses 11, and regions extracted from the imaginary divisions will be referred to as molding portions 26a, 26b, ··· 26n (n represents a natural number of 2 or more). In this example, in the molding portions 26a and 26f constituting the respective end portions 22e of the U-like shape, the respective cylindrical lenses 11 are barely stretched by thermal shaping and have almost the same shape as the cylindrical lenses in the molding material 10; however, in the molding portion 26d constituting the center of the U-like shape, the respective cylindrical lenses 11 are stretched in the width direction more than the cylindrical lenses in the molding material 10. However, even in the curve of a U-like shape, the most-stretched portion changes depending on the curvature or the like of the curve. The details of the cylindrical lenses 11 in the decorative member 22 will be described below using separate drawings.

A thickness T22 of the decorative member 22 changes from the end portion 22e to the center of the U-like shape due to stretching by thermal shaping, but is preferably in a range of 0.06 mm or more and 5 mm or less. In a case in which the thickness T22 is 0.06 mm or more, the self-supporting property is more favorable, and the workability is also more favorable compared with those in a case in which the thickness is less than 0.06 mm. The workability being favorable means that it is less likely that shaping causes breakage, split, and/or the like and the degree of freedom for forms that can be formed is high. In addition, in a case in which the thickness T22 is 5 mm or less, shaping by, for example, thermal shaping or the like described below is easier compared with a case in which the thickness is more than 5 mm.

In addition, in the decorative member 22, due to stretching by shaping under heating, there are places in which the pitch P11 (refer to Fig. 1) between the cylindrical lenses 11 is greater than the pitch in the molding material 10. For example, in this example, in the molding portions 26a and 26f, the pitch P11 is almost the same as that in the molding material 10; however, in the molding portions 26b to 26e that are closer to the center of the U-like shape than the above-described portions, the cylindrical lenses 11 are formed at the pitches P11 that are greater than the pitch in the molding material 10. In the decorative member 22, the pitch P11 between the cylindrical lenses 11 is preferably in a range of 0.05 mm or more and 1 mm or less. In a case in which the pitch is 0.05 mm or more and 1.0 mm or less, changes in the width and brightness of light from the second lens surface 11B from which a sense of three-dimensions is felt are sufficiently observed in association with changes in the pitches P11 in the array direction of the cylindrical lenses 11.

The surface hardness of the decorative member 22 is set to H or more in terms of the scratch hardness (the pencil method), which imparts scratch resistance to the lighting device 20. The above-described hardness can be obtained using Japanese Industrial Standards JIS5600 4.4 Scratch Hardness (Pencil Method).

Meanwhile, a plurality of light sources 21 is provided side by side in the horizontal direction indicated by an arrow Z in Fig. 3 (hereinafter, referred to as the Z direction), and these light sources 21 are separated from one another. The decorative member 22 is provided so that the extension direction of the respective cylindrical lenses 11 is along the array direction of these light sources 21.

Two molding portions that are randomly extracted from the molding portions 26a, 26b, ···, 26n are set as a first molding portion and a second molding portion respectively. In this example, the molding portion 26a on one end portion 22e side is set as the first molding portion, and the molding portion 26d approximately in the center of the U-like shape is set as the second molding portion. Meanwhile, in the following description, in the case of not being differentiated, each of the molding portions 26a, 26b, ···, 26n will be referred to as the molding portion 26. In addition, in a case in which the cylindrical lenses 11 in the molding portions 26a, 26b, ···, 26n are differentiated from one another, the cylindrical lenses will be referred to as cylindrical lenses 11a, 11b, ···, 11n (n is a natural number of 2 or more) respectively.

With reference to Fig. 4A and Fig. 4B, the cylindrical lens 11a as a first cylindrical lens in the first molding portion and the cylindrical lens 11d as a second cylindrical lens in the second molding portion will be described below. Meanwhile, similar to the molding material 10, the cylindrical lens 11a and the cylindrical lens 11d have a layered structure. Other cylindrical lenses 11 (refer to Fig. 2) in the decorative member 22 also, similarly, have a layered structure. In Fig. 4A and Fig. 4B, members made of the same material as in the molding material 10 will be given the same reference sign as in Fig. 1 and will not be described. The cylindrical lens 11a and the cylindrical lens 11d have a layered structure in which a second convex lens layer 30 forming the convex-form first lens surface 11A and the transparent layer 13 forming the second lens surface 11B that is almost flat as described above overlap each other in the thickness direction.

As illustrated in Fig. 4A, in the plurality of cylindrical lenses 11a that is formed in the first molding portion, the orientations of the lenses, that is, the orientation of the first lens surface 11A which is a viewing side is in an X direction. On the other hand, as illustrated in Fig. 4B, in the plurality of cylindrical lenses 11d that is formed in the second molding portion, the orientations of the lenses are approximately in a Y direction. As described above, in the cylindrical lens 11a and the cylindrical lens 11d, the orientations of the lenses are different from each other. Meanwhile, in this example, in the plurality of cylindrical lenses 11a in the first molding portion, the orientations of the lenses are the same as one another. In addition, in this example, in the plurality of cylindrical lenses 11d in the second molding portion, the orientations of the lenses are somewhat different from one another, but are all approximately in the Y direction. Therefore, the cylindrical lenses 11a have a different orientation from all of the cylindrical lenses 11d in the second molding portion. Meanwhile, the orientation of the lens refers to an orientation from the second lens surface 11B toward an apex 11t in the foot of a perpendicular line hung from the apex 11t of the cylindrical lens 11 toward the second lens surface 11B.

In addition, as described above, the cylindrical lens 11d is formed to be stretched in the width direction more than the cylindrical lens 11a by thermal shaping, and thus the cylindrical lens 11a and the cylindrical lens 11d have mutually different shapes. Specifically, in this example, the cylindrical lens 11d has a greater width, a smaller thickness, and a greater curvature radius of the first lens surface 11A than the cylindrical lens 11a.

The second convex lens layer 30 includes a thermosetting polymer. This thermosetting polymer refers to both the thermosetting polymer and a thermosetting polymer generated by curing the first thermosetting compound in the first convex lens layer 12 in the molding material 10. In the present embodiment, the first thermosetting compound and the second thermosetting compound are the same substance as described above, and thus the second convex lens layer 30 includes one kind of thermosetting polymer. Other substances that are contained in the second convex lens layer 30 are the same as substances that are included in the first convex lens layer 12. For example, in the present embodiment, the first convex lens layer 12 in the molding material 10 includes the photocurable polymer, and thus the second convex lens layer 30 also includes the photocurable polymer.

This example is about a case in which the molding portion 26d is set as the second molding portion; however, a different molding portion, for example, the molding portion 26b, 26c, 26e, or 26f may be set as the second molding portion. In addition, this example is about a case in which the molding portion 26a is set as the first molding portion; however, a different molding portion, for example, the molding portion 26b to 26f may be set as the second molding portion.

The action of the above-described constitution will be described. The decorative member 22 is constituted of the plurality of cylindrical lenses 11, and thus light from the light sources 21 disposed on the flat second lens surface 11B side is refracted in the plurality of cylindrical lenses 11, and changes are imparted to the appearance of the light on the convex-form first lens surface 11A side. The respective cylindrical lenses 11 extend along the array direction of the plurality of light sources 21 (refer to Fig. 2 and Fig. 3), and thus, in a case in which the lighting device 20 is seen from the front surface on the first lens surface 11A side as illustrated in Fig. 3, light from the respective light sources 21 is observed in an aspect of being extended in the vertical direction in Fig. 3. The decorative member 22 includes the cylindrical lens 11a and the cylindrical lens 11d in which the orientations of the lenses are different from each other, the cylindrical lens 11a and the cylindrical lens 11d have different forms in a cross section in the array direction, and thus changes that are imparted to the appearance of light are greater than those in a case in which a lenticular sheet of the related art in which a plurality of cylindrical lenses having the same form is arrayed in parallel is curved. Therefore, for example, in a case in which the lighting device 20 is seen from the front surface as described above, light from the respective light sources 21 which is observed on the first lens surface 11A side is observed to have a width and/or a contrasting density (bright and dark) that more significantly change from the location of the light source 21 in the vertical direction in Fig. 3. More specifically, light being observed becomes broader and darker as the observation point moves from each of the upper end and the lower end toward the center in the vertical direction in Fig. 3, that is, the location of the light source 21. As a result, a sense of three-dimensions is further emphasized, and the designability as the lighting device 20 enhances. In this example, the decorative member 22 is constituted of the cylindrical lenses 11a, 11b, ···, 11n in which the orientations of the lenses are different from one another, and these cylindrical lenses also have forms that are different from one another in a cross section in the array direction, and thus the designability as the lighting device 20 is further enhanced.

The second convex lens layer 30 is constituted of the transparent cylindrical lens 11, includes the thermosetting polymer, and thus has a more favorable durability to heat and a more favorable resistance to scratch than a second convex lens layer formed of a thermoplastic resin.

The decorative member 22 includes the transparent layer 13 in addition to the second convex lens layer 30 and thus has superior durability and superior handleability such as ease of assembly with the support member 23 and/or attachment to, for example, other members to a decorative member constituted of the second convex lens layer 30 alone.

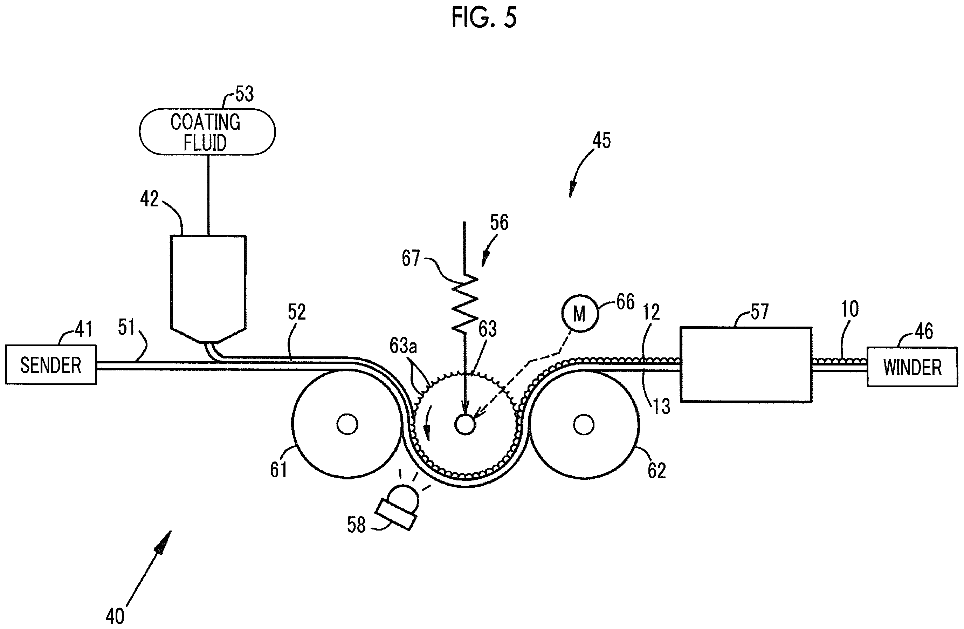

A method for producing the decorative member 22 will be described below. The decorative member 22 is produced by a molding material-producing step of producing the molding material 10 and a shaping step of shaping the molding material 10 to the decorative member 22. As illustrated in Fig. 5, a molding material-producing device 40 that produces the molding material 10 is constituted of a sender 41, a coater 42, a lens-forming unit 45, a winder 46, and the like.

The sender 41 is a member for supplying a long transparent film 51 which will become the transparent layer 13 in the molding material 10 to the lens-forming unit 45. In this example, the film 51 is in a state of being wound in a roll shape, the film roll (illustrated in the drawing) having the film 51 wound in a roll shape is set in the sender 41, and the film 51 is sent from this film roll. The film 51 functions as a support for a coated film 52 which will be formed using the coater 42. Meanwhile, a driving roller (not illustrated) that rotates in the circumferential direction is disposed between the lens-forming unit 45 and the winder 46. The film 51 is wound around this driving roller and transported toward the downstream of molding material-producing device 40 by the rotation of the driving roller.

The coater 42 is a member for forming the coated film 52 on the film 51. The coated film 52 is turned into the first convex lens layer 12 in the molding material 10 using the lens-forming unit 45. The coater 42 continuously outpours a coating fluid 53 being supplied. The coating fluid 53 is outpoured toward the film 51 that travels in the longitudinal direction, and thus the coated film 52 is formed on one film surface of the film 51. The film 51 on which the coated film 52 is formed is guided to the lens-forming unit 45.

The coating fluid 53 includes a thermosetting compound. In the present embodiment, this thermosetting compound is heated using a heater 57 described below, thereby generating the first thermosetting compound and the thermosetting polymer that are included in the first convex lens layer 12 in the molding material 10. In a case in which the thermosetting polymer in the molding material 10 is generated from a second thermosetting compound that is different from the first thermosetting compound, the first thermosetting compound and the second thermosetting compound which are different from each other may be used as the thermosetting compound in the coating fluid 53. In addition, in the present embodiment, the molding material 10 including a photocurable polymer in the first convex lens layer 12 is produced, and thus a photocurable compound is also added to the coating fluid 53. The photocurable compound in the present embodiment is ADCP described above, but is not limited thereto, and may be any one of a monomer, an oligomer, or a polymer. Meanwhile, depending on the thermosetting compound and the photocurable compound to be used, the coating fluid 53 may include solvents therefor.

The lens-forming unit 45 is a member for forming (imparting a form) the cylindrical lenses 11 in the molding material 10. The lens-forming unit 45 is constituted of a form-imparting machine 56, the heater 57, a light source 58, and the like.

The form-imparting machine 56 is a member for forming the first lens surface 11A of the cylindrical lens 11. The form-imparting machine 56 includes a first support roller 61, a second support roller 62, and a shape-imparting roller 63 as a shape-imparting member. The first support roller 61, the second support roller 62, and the shape-imparting roller 63 are disposed with the rotation axes along the width direction of the film 51, that is, the paper depth direction in Fig. 5. From the upstream side, the first support roller 61, the shape-imparting roller 63, and the second support roller 62 are disposed.

In this example, the first support roller 61 and the second support roller 62 are disposed on a side of the transportation path of the film 51 opposite to the coated film 52, and the film 51 is wound around the circumferential surfaces thereof. The first support roller 61 and the second support roller 62 rotate following the transportation of the film 51. The first support roller 61 and the second support roller 62 may be rotated using a motor in synchronization with the transportation of the film 51.

The shape-imparting roller 63 is provided so as to face the first support roller 61 and the second support roller 62 and is disposed on the coated film 52 side of the transportation path of the film 51. The shape-imparting roller 63 continuously forms the first convex lens layer 12 having the first lens surfaces 11A that protrude in a semicircular column shape in the coated film 52 in synchronization with the first support roller 61 and the second support roller 62. That is, the first support roller 61 and the second support roller 62 function as a support member that supports the film 51 and also functions as a shape-imparting member for forming the first lens surface 11A.

On the circumferential surface of the shape-imparting roller 63, a plurality of concave portions 63a having a semicircular column-shaped cross section is formed in order to form the first convex lens layer 12. The respective concave portions 63a extend in the axial direction of the shape-imparting roller 63, that is, the width direction of the film 51, and the plurality of concave portions 63a is formed side by side along the circumferential direction of the shape-imparting roller 63. The shape-imparting roller 63 is rotated using a motor 66 in a state in which the film 51 is sandwiched between the first support roller 61 and the shape-imparting roller or between the second support roller 62 and the shape-imparting roller. The rotation direction of the shape-imparting roller 63 is the direction in which the film 51 is transported (the counterclockwise direction in Fig. 5). The shape-imparting roller 63 presses the film 51 being transported from the coated film 52 side on the first support roller 61, on the second support roller 62, and between the first support roller 61 and the second support roller 62 respectively so as to transfer the shape of the concave portion 63a to the coated film 52 and thus forms the first convex lens layer 12. Meanwhile, the respective concave portions 63a extend in the circumferential direction of the shape-imparting roller, that is, the longitudinal direction of the film 51, and the plurality of concave portions 63a may also be formed side by side in the axial direction of the shape-imparting roller.

The shape of the concave portion 63a in the shape-imparting roller 63 is determined depending on the shape of the first lens surface 11A of the first convex lens layer 12 to be formed. Meanwhile, the shape of the first lens surface 11A to be formed is determined depending on the intended shape of the first lens surface 11A in the second convex lens layer 30.

To the shape-imparting roller 63, a pressure adjuster 67 is preferably provided as in the present embodiment. The pressure adjuster 67 is a member for adjusting the pressing force of the shape-imparting roller 63 to the coated film 52 during the transfer of the shape of the concave portion 63a. The pressure adjuster 67 adjusts the pressing force, thereby more reliably forming the first convex lens layer 12.

The heater 57 cures the thermosetting compound in the first convex lens layer 12 to be formed, but creates a state in which the first thermosetting compound remains. The heater 57 is disposed so as to surround a transportation path in the downstream of the form-imparting machine 56 and supplies heated gas, for example, the air to the inside. The thermosetting compound in the first convex lens layer 12 formed using the form-imparting machine 56 is passed through the heater 57, whereby the curing of the thermosetting compound proceeds. The presence and absence of the remaining of the thermosetting compound and the remaining percentage can be confirmed and quantitatively determined by comparing before curing and after curing through a spectrum analysis of FT-IR. In the present embodiment, the peak intensities at 810 cm⁻¹ and 1,635 cm⁻¹ before curing and after curing are compared with each other respectively, thereby confirming and quantitatively determining the presence and absence of the remaining of the thermosetting compound and the remaining percentage. The peak at 810 cm⁻¹ corresponds to the C-H (a single bond between carbon and hydrogen) vending of a vinyl group, and the peak at 1,635 cm⁻¹ corresponds to the C=C (a double bond between carbon and carbon) stretching of a vinyl group.

The remaining percentage of the thermosetting compound is preferably at least 10 mass%, that is, in a range of 10 mass% or more and less than 100 mass%, and, in such a case, the molding material 10 in which the mass proportion of the first thermosetting compound in the first convex lens layer 12 in the molding material 10 is adjusted is reliably obtained. The above-described remaining percentage (the unit is mass%) can be obtained from a calculation expression of (X1/X2)×100 in a case in which the mass of the thermosetting compound is represented by X1, and the mass of the first convex lens layer 12 is represented by X2. In the present embodiment, X1 and X2 are obtained from the peak intensities at 810 cm⁻¹ and 1,635 cm⁻¹ in FT-IR. For example, in the present embodiment, in a case in which the peak intensity before the heating and curing of the thermosetting compound is set to 100, a value computed from a calibration curve after the measurement of the peak intensity after heating and curing is obtained as the mass X1 of the remaining thermosetting compound, and the total solid content of the thermosetting compound that is used to form the first convex lens layer 12 is obtained as the mass X2. In addition, in the present embodiment, the remaining percentage is set to at least 10 mass%, whereby the mass proportion of the first thermosetting compound in the first convex lens layer 12 in the molding material 10 is set to at least 10 mass% as described above.

The internal temperature of the heater 57 and the time for passing the thermosetting compound through the heater 57 are adjusted depending on the kind of the thermosetting compound being used, thereby adjusting the remaining amount and/or remaining percentage of the thermosetting compound. The internal temperature of the heater 57, that is, the temperature of gas that is sent into the inside is preferably in a range of 100°C or higher and 200°C or lower and, in the present embodiment, set to 160°C. The time for passing the thermosetting compound through the heater 57, that is, the heating treatment time is preferably in a range of 10 seconds or longer and 200 seconds or shorter and, in the present embodiment, set to 30 seconds. Therefore, in the present embodiment, the molding material 10 is obtained in a state in which the first thermosetting compound is included.

At least any one of the heater 57 or, for example, a variety of heating devices such as a radiation-type heater (not illustrated) and/or a blower (not illustrated) that sends heated gas may be used. Meanwhile, in addition to the heater 57 provided in the downstream of the form-imparting machine 56, a variety of heating devices as described above may be provided at a location facing the first support roller 61 in the upstream of the shape-imparting roller 63, a location on the film 51 side facing the shape-imparting roller 63, a location facing the second support roller 62 in the downstream of the shape-imparting roller 63, and the like. In a case in which a variety of heating devices as described above are provided at any of the above-described locations, the heater 57 provided in the downstream of the form-imparting machine 56 may not be used.

The light source 58 is a member for curing the photocurable compound and thus generating a photocurable polymer. The light source 58 is provided in a state of facing the shape-imparting roller 63 and discharges ultraviolet rays. During the passing of the film 51 in a state of being wound around the shape-imparting roller 63, light from the light source 58 is radiated on the coated film 52 through the film 51, the photocurable compound cures, and a photocurable polymer is generated.

The kind of light that is discharged by the light source 58 and the output at which light is discharged depend on the kind of the photocurable compound. The light source 58 and/or other light sources (not illustrated) may be provided. In a case in which other light sources are used in addition to the light source 58, other light sources can be provided at a location facing the first support roller 61 in the upstream of the shape-imparting roller 63, a location on the film 51 side facing the shape-imparting roller 63, a location facing the second support roller 62 in the downstream of the shape-imparting roller 63, and the like.

The winder 46 winds the obtained long molding material 10 around a winding core (not illustrated) in a roll shape. The molding material 10 in a roll shape is cut to a sheet shape using a cutter before being provided to a shaping device 70 described below. Therefore, in the molding material-producing device 40, a cutter (not illustrated) that cuts the long molding material 10 to a sheet shape may be provided at the location of the winder 46 without using the winder 46. In addition, in the case of producing a molding material not including the transparent layer 13, a peeler (not illustrated) that peels the transparent layer 13 portion off from the first convex lens layer 12 portion may be provided between the lens-forming unit 45 and the winder 46, and the transparent layer 13 portion may be peeled off using the peeler. Meanwhile, in this example, the shape-imparting roller 63 is used as the shape-imparting member, but the shape-imparting member is not limited thereto. For example, in the case of producing a sheet-type molding material or the like, for example, a sheet-shaped shape-imparting member having the concave portions 63a formed on the surface may be used.

The shaping device 70 illustrated in Fig. 6 is a member for shaping the sheet-shaped molding material 10 and thus producing the decorative member 22. The shaping device 70 includes a die unit 72, a moving mechanism 73, a heater 74, and a control portion 76 and carries out a thermal shaping treatment under heating. However, the shaping method is not limited to thermal shaping, and, for example, a method such as vacuum shaping or vacuum pressure shaping may be used.

The die unit 72 has a first die 77, a second die 78, and a trunk 79. The trunk 79 has a rectangular cross-sectional shape in the horizontal direction in Fig. 6 which is orthogonal to a compression direction. The trunk 79 has a guide hole 79a that penetrates in the compression direction by the first die 77 and the second die 78. Meanwhile, the compression direction refers to the vertical direction in Fig. 6. The first die 77 and the second die 78 are guided to the inner wall of the guide hole 79a and are movable in the compression direction. The first die 77 and the second die 78 carry out the compression shaping of the molding material 10 in the trunk 79 and thus shape the decorative member 22. The molding material 10 is formed in a shape suitable to the compression shaping of the decorative member 22.

In the first die 77 and the second die 78, a transfer surface 77a and a transfer surface 78a for forming the second lens surface 11B and the first lens surface 11A having the curve shape of the decorative member 22 respectively are formed on facing surfaces that face each other. The transfer surface 77a of the first die 77 is formed in a convex form, and the transfer surface 78a of the second die 78 is formed in a concave form.

The moving mechanism 73 moves the first die 77 and the second die 78 respectively in a direction in which the distance therebetween increases and decreases. In addition, in a case in which the molding material 10 is stored in the trunk 79, the first die 77 is moved upwards and evacuated from the trunk 79. The heater 74 heats the die unit 72 and thus heats the molding material 10 in the trunk 79. The moving mechanism 73 and the heater 74 are controlled using the control portion 76. The control portion 76 controls the amount of heat generated from the heater 74 and thus adjusts the temperature in the trunk 79.

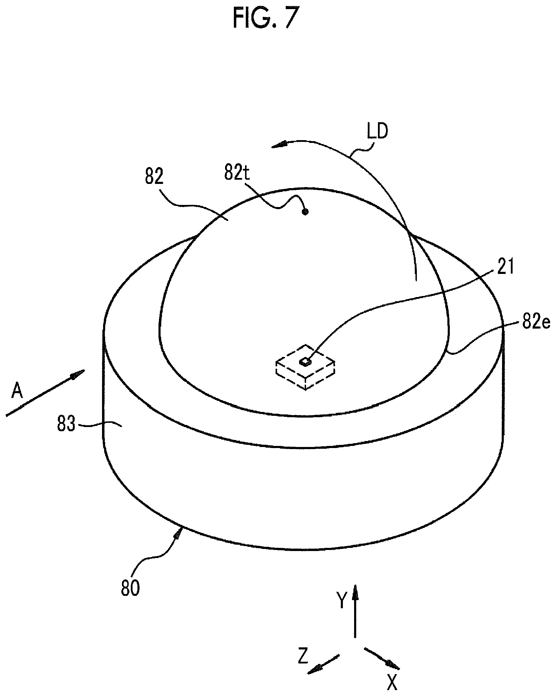

The decorative member 22 is an example of a three-dimensional molded article having a shape curved in one direction and may be a three-dimensional molded article having a shape curved in a plurality of directions. That is, the molding material 10 can also be shaped into a three-dimensional molded article having a shape curved in a plurality of directions, and, in order for that, the die unit 72 in the shaping device 70 may be replaced by a die unit tailored to the curve shape of a target three-dimensional molded article. A lighting device 80 illustrated in Fig. 7 is constituted of the light source 21, a decorative member 82 as a three-dimensional molded article, a support member 83, or the like. Meanwhile, the same member as in Fig. 2 and Fig. 3 will be given the same reference sign as in Fig. 2 and Fig. 3 and will not be described.

The support member 83 supports the light source 21 and the decorative member 22 and is formed in, for example, a circular plate shape. The lighting device 80 is installed on, for example, an indoor floor surface, a table, or the like in a posture in which the support member 83 faces downwards and the decorative member 82 faces an observer side. Therefore, the support member 83 functions as a base for the lighting device 80. In the support member 83 as well, similar to the support member 23, a power supply portion (not illustrated) such as a battery that supplies power to the light source 21 is mounted, and a switch (not illustrated) for turning the power supply by the power supply portion on and off is provided.

The decorative member 82 also, similar to the decorative member 22, performs a light decoration function that enhances the designability of the lighting device 80 by imparting changes to the appearance of light that is discharged from the light source 21. The decorative member 82 is also, similar to the decorative member 22, formed in a sheet shape and provided in the support member 83 so that an outer surface which is on the observer side serves as the convex-form first lens surface 11A (refer to Fig. 1) and an inner surface on the light source 21 side serves as the approximately flat second lens surface 11B (refer to Fig. 1).

The decorative member 82 has a shape curved in a semispherical convex shape on the second convex lens layer 30 (refer to Fig. 4A and Fig. 4B) side, and a plurality of cylindrical lenses 11 is disposed side by side on one continuous curved surface. An end portion 82e having a circular form is fixed to the support member 83, whereby the decorative member 82 is supported by the support member 83. The curve shape of the decorative member 82 in this example is a semispherical shape, and thus the curvature becomes constant from the end portion 82e toward an apex 82t, but the curvature may change.

The decorative member 82 is provided with a curve shape by compression shaping, and thus the plurality of cylindrical lenses 11 constituting the decorative member 82 has an aspect in which the cylindrical lenses 11 in the molding material 10 stretch in a variety of directions. In this example, the degree of stretching increases from the end portion 82e toward the apex 82t, but the degrees of stretching at individual locations, the relationship of the degree of stretching between, for example, two random locations, and/or the like change depending on the curvature of the curve of the decorative member 82 and the like. Meanwhile, an X axis, a Y axis, and a Z axis in Fig. 7 are orthogonal to one another, and the array direction of the plurality of cylindrical lenses 11 is indicated by a reference sign LD. The cylindrical lenses 11 in the decorative member 82 will be described using Fig. 8 illustrating the decorative member 82 seen from a side indicated by an arrow A in Fig. 7.

Here, as illustrated in Fig. 8, the decorative member 82 is imaginarily divided in the array direction LD that passes through the apex 82t, and regions extracted from the divisions are considered as molding portions 86a, 86b, ··· 86n (n represents a natural number of 2 or more). The molding portion 86a on the end portion 82e side is considered as a first molding portion, and the molding portion 86d including the apex 82t is considered as a second molding portion. Meanwhile, in the case of differentiating the cylindrical lenses 11 in the molding portions 86a, 86b, ··· 86n, similar to the above-described embodiment, the cylindrical lenses will be considered as cylindrical lenses 11a, 11b, ···, 11n respectively.

In this example, in the molding portion 86d, the cylindrical lens 11 is formed by shaping so as to be more stretched in the width direction than in the molding portion 86a. Specifically, the cylindrical lens 11a in the molding portion 86a is similar to the cylindrical lens 11a in the molding portion 26a illustrated in Fig. 4A, and the cylindrical lens 11d in the molding portion 86d is similar to the cylindrical lens 11d in the molding portion 26a illustrated in Fig. 4B. Therefore, the difference between the cylindrical lens 11a in the molding portion 86a and the cylindrical lens lid in the molding portion 86d is the same as that in the previous embodiment described with reference to Fig. 4A and Fig. 4B. Meanwhile, an arrow X in Fig. 7 and Fig. 8 corresponds to an arrow X in Fig. 4A and Fig. 4B, and an arrow Y corresponds to an arrow X in Fig. 4A and Fig. 4B.

This example is about a case in which the molding portion 86d is set as the second molding portion; however, a different molding portion, for example, the molding portion 86b, 86c, 86e, or 86f may be set as the second molding portion. In addition, this example is about a case in which the molding portion 86a is set as the first molding portion; however, a different molding portion, for example, the molding portion 86b to 86f may be set as the second molding portion.

The action of the above-described constitution will be described. The decorative member 82 is, similar to the decorative member 22, constituted of the plurality of cylindrical lenses 11, and thus light from the light source 21 is refracted by the plurality of cylindrical lenses 11, and changes are imparted to the appearance of the light. The respective cylindrical lenses 11 is arrayed side by side in a direction orthogonal to the extension direction of the respective cylindrical lenses, and thus, in a case in which the lighting device 80 is seen from the above in Fig. 8, light from the light source 21 is observed in a linear aspect. The decorative member 82 includes the cylindrical lens 11a and the cylindrical lens 11d in which the orientations of the lenses are different from each other, and the cylindrical lens 11a and the cylindrical lens 11d have different forms in a cross section in the array direction LD, and thus greater changes are imparted to the appearance of light. Therefore, for example, in the case of being seen from the above in Fig. 8, light from the light source 21 which is observed is observed to have a width and/or a contrasting density (bright and dark) that extremely significantly change from the location of the light source 21 in the array direction of the cylindrical lenses 11. As a result, a sense of three-dimensions is further emphasized, and the designability as the lighting device 80 enhances. In this example, the decorative member 82 is constituted of the cylindrical lenses 11a, 11b, ···, 11n in which the orientations of the lenses are different from one another, and these cylindrical lenses also have forms that are different from one another in a cross section in the array direction LD, and thus the designability as the lighting device 80 is further enhanced, and the decoration property is rich.

The molding material 10 and the decorative members 22 and 82 as three-dimensional molded articles have a bilayer structure, but may have a three or more-layer structure. For example, in Fig. 9, a molding material 110 has a lens portion 111 and the image-forming portion 112, and the lens portion 111 has the same constitution as the molding material 10. That is, the molding material 110 is a molding material obtained by further providing the image-forming portion 112 to the molding material 10.

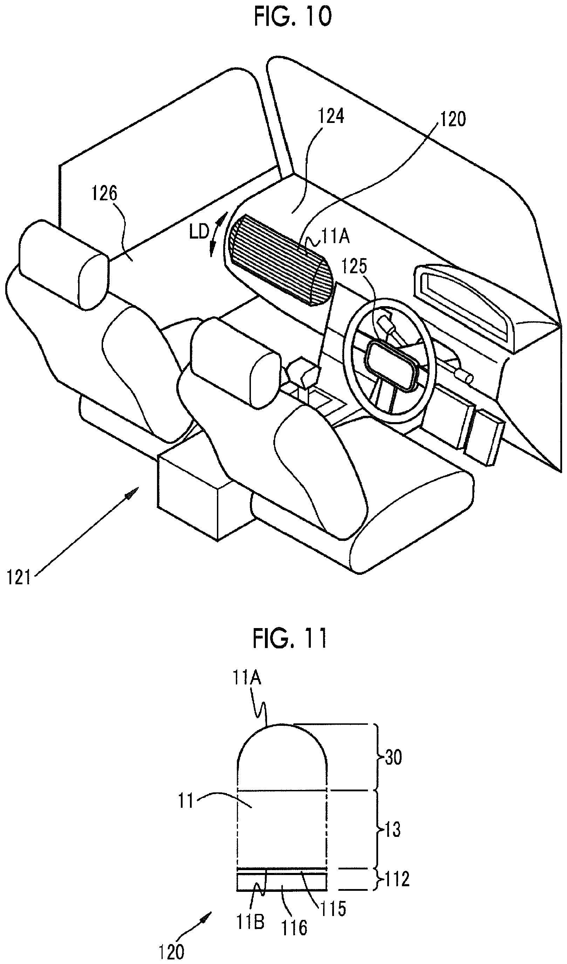

The image-forming portion 112 is a so-called image display body for enabling three-dimensional images to be observed in a case in which a decorative member 120 (refer to Fig. 10) obtained by providing a curve shape to the molding material 110 by shaping is observed from the first lens surface 11A side. The image-forming portion 112 is provided on the flat second lens surface 11B in the lens portion 111 and includes a print layer 115 as a record layer on which an image is recorded and a support 116 provided with the print layer 115. The print layer 115 is in contact with the second lens surface 11B. Meanwhile, in this example, the image-forming portion 112 having the print layer 115 provided on the support 116 is disposed on the second lens surface 11B, but the constitution is not limited to this aspect. For example, an image-forming portion having a monolayer structure of the print layer 115 alone may be provided on the second lens surface 11B.

In this example, in the decorative member 120 (refer to Fig. 10), a first observation point and a second observation point are set at two different places, a first three-dimensional image can be observed at the first observation point, and a second three-dimensional image can be observed at the second observation point. The print layer 115 is a member having, for example, linear images corresponding to the first three-dimensional image and the second three-dimensional image shaped in the decorative member 120 formed and recorded on the surface of the support 116. That is, linear images obtained by dividing a right-view image and a left-view image captured from two (right and left) views, between which there is parallax, in a stripe shape respectively are alternately disposed at the first observation point and the second observation point respectively, whereby three-dimensional images are recorded so as to be observed at the first observation point and the second observation point respectively. Therefore, the first three-dimensional image is observed from the first observation point, the second three-dimensional image is observed from the second observation point, and the three-dimensional images are switched each other by the movement of the observation points (changing of three-dimensional images). The print layer 115 is formed of paint and, in the present example, formed of a pigment. Here, the print layer may be formed of paint other than a pigment and may be formed of, for example, a dye or the like. In a case in which the transparent layer 13 is formed of PET, PC, or TAC described above, the print layer 115 is preferably formed using a pigment for the transparent layer 13. Meanwhile, the print layer 115 is formed by printing, and thus the thickness is not taken into account; however, in Fig. 9, the print layer is illustrated as a layer shape having a thickness for the convenience of description. As described above, the record layer is not limited to a record layer having a layer shape for which the thickness is taken into account.

An image that is recorded in the present example is an image obtained by combining an image for a three-dimensional view as an image for changing as described above. However, the image that is recorded is not limited thereto. For example, the image may be an image for changing obtained by observing the same image with the right and left eyes at the first observation point and the second observation point respectively, dividing a first image that is observed from the first observation point and a second image that is observed from the second observation point to a linear shape respectively, and alternately arraying these images. In addition, the image may be an image for a three-dimensional view obtained by dividing a right-view image and a left-view image from which a three-dimensional image is observed due to parallax between the right eye and the left eye in a linear shape respectively and alternately arraying the images.

The molding material 110 can be produced using the film 51 to which the image-forming portion 112 has been imparted and the molding material-producing device 40 after attaching the image-forming portion 112 in advance to the film 51 (refer to Fig. 5) which serves as the transparent layer. Meanwhile, the print layer 115 can be imparted to the support 116 using, for example, an offset method, an ink jet method, or the like. In addition, in the case of producing a molding material in which an image-forming portion having a monolayer structure of the print layer 115 alone is provided on the second lens surface 11B, the molding material can be produced using the film 51 to which the print layer 115 has been imparted and the molding material-producing device 40 after imparting the print layer 115 to the film 51 (refer to Fig. 5) in advance using a variety of the above-described methods.

The molding material 110 is shaped into a curved sheet shape using a shaping device in which a different die unit other than the die unit 72 is used, whereby a decorative member can be produced. In Fig. 10, the decorative member 120 is a member produced by the shaping of the molding material 110 and is used as an interior component of an automobile 121. The decorative member 120 is attached so as to be buried in other interior components and, in this example, is attached as a part of a dashboard 124. It is also possible to use the molding material as a decorative member that is attached as, for example, a part of a steering wheel 125 or a door panel 126 by providing a different curve shape to the molding material 110.

The decorative member 120 is disposed with the convex-form first lens surface 11A facing the observer side. Meanwhile, in Fig. 10, the array direction of the cylindrical lenses 11 in the decorative member 120 is indicated by a reference sign LD. The decorative member 120 has a layered structure like the molding material 110 and includes the lens portion 111 and the image-forming portion 112 as illustrated in Fig. 11, and the lens portion 111 has the same layer constitution as the decorative member 22. That is, the decorative member 120 is a decorative member obtained by further providing the image-forming portion 112 to the decorative member 22.

The decorative member 120 is also formed in a curved sheet shape curved in a plurality of directions, and thus, similar to the decorative member 82, includes the plurality of cylindrical lenses 11 in which the orientations of the lenses are different from one another, and these cylindrical lenses 11 have different forms on a cross section in the array direction LD. Therefore, in the decorative member 120, light that has been incident on the decorative member 120 from the outside and reflected in the interface between the print layer 115 and the transparent layer 13 is refracted in the plurality of cylindrical lenses 11, and changes are imparted to the appearance of the light. Therefore, the image on the print layer 115 is observed as an image having unevenness in the reflected light and, for example, observed with a contrasting density and/or brightness difference of color. As a result, a sense of three-dimensions is further emphasized, the designability as an interior component enhances, and the interior becomes rich in terms of the decoration property.

Meanwhile, in the print layer 115 in the molding material 110, it is preferable to provide a distribution of the concentration of a pigment depending on the intended designability in the decorative member 120. Meanwhile, the provision of the distribution mentioned here also refers to the removal of the difference in the concentration of the pigment.

### Explanation of References

10, 110: molding material
11: cylindrical lens
11A: first lens surface
11B: second lens surface
11a, 11b, ···, 11n: cylindrical lens
11t: apex
12: first convex lens layer
13: transparent layer
20, 80: lighting device
21: light source
22, 82, 120: decorative member
22e, 82e: end portion
23, 83: support member
23a: one surface of support member
23b: the other surface of support member
26a, 26b, ···, 26n, 86a, 86b, ···, 86n: molding portion
30: second convex lens layer
40: molding material-producing device
41: sender
42: coater
45: lens-forming unit
46: winder
51: film
52: coated film
53: coating fluid
56: form-imparting machine
57: heater
58: light source
61: first support roller
62: second support roller
63: shape-imparting roller
63a: concave portion
66: motor
67: pressure adjuster
70: shaping device
72: die unit
73: moving mechanism
74: heater
76: control portion
77: first die
77a: transfer surface
78: second die
78a: transfer surface
79: trunk
79a: guide hole
82t: apex
111: lens portion
112: image-forming portion
115: print layer
116: support
121: automobile
124: dashboard
125: steering wheel
126: door panel
P11: pitch
LD: array direction
T10, T22: thickness

## Claims

1. A molding material comprising:
a thermosetting compound that cures by heating; and
a transparent polymer which is obtained by curing a thermosetting compound,
wherein the molding material is formed in a film shape, and
a plurality of cylindrical lenses is arrayed in parallel on one surface of the molding material.

2. The molding material according to claim 1, further comprising:
a convex lens layer forming a convex lens surface of the cylindrical lens; and
a transparent layer forming a flat lens surface of the cylindrical lens.

3. The molding material according to claim 1 or 2, further comprising:
an image-forming portion in which an image is formed using paint on the flat lens surface of the cylindrical lens.

4. A three-dimensional molded article comprising:
a plurality of cylindrical lenses arrayed in parallel,
wherein the three-dimensional molded article is formed in a curved sheet shape,
the plurality of cylindrical lenses includes a first cylindrical lens and a second cylindrical lens in which orientations of the lenses are different from each other, and
the first cylindrical lens and the second cylindrical lens have mutually different cross-sectional shapes in an array direction.

5. The three-dimensional molded article according to claim 4, further comprising:
a transparent polymer obtained by curing a thermosetting compound.

6. The three-dimensional molded article according to claim 4 or 5, further comprising:
a convex lens layer forming convex lens surfaces of the first cylindrical lens and the second cylindrical lens; and
a transparent layer forming flat lens surfaces of the first cylindrical lens and the second cylindrical lens.

7. The three-dimensional molded article according to any one of claims 4 to 6, further comprising:
an image-forming portion formed using paint on the flat lens surfaces of the plurality of cylindrical lenses.

8. A method for producing a molding material comprising:
a coating step of applying a coating fluid including a thermosetting compound that cures by heating to a support, thereby forming a coated film; and
a lens-forming step of pressing the coated film using a shape-imparting member having a plurality of semicircular column-shaped concave portions formed on a surface thereof so as to form a plurality of cylindrical lenses, heating the coated film so as to be cured in a state in which the thermosetting compound remains, and producing a molding material including the thermosetting compound and a polymer which is obtained by curing the thermosetting compound.

9. The method for producing a molding material according to claim 8,
wherein the shape-imparting member is a shape-imparting roller having the concave portion formed in a circumferential surface thereof.

10. A method for producing a three-dimensional molded article comprising:
a coating step of applying a coating fluid including a thermosetting compound that cures by heating to a support, thereby forming a coated film;
a lens-forming step of pressing the coated film using a shape-imparting member having a plurality of semicircular column-shaped concave portions formed on a surface thereof so as to form a plurality of cylindrical lenses, heating the coated film so as to be cured in a state in which the thermosetting compound remains, and producing a molding material including the thermosetting compound and a polymer which is obtained by curing the thermosetting compound; and
a shaping step of carrying out a shaping treatment on the molding material under heating.

11. The method for producing a three-dimensional molded article according to claim 10,
wherein the shape-imparting member is a shape-imparting roller having the concave portions formed in a circumferential surface thereof.
